# EUROPÄISCHE PATENTSCHRIFT

(11) **EP 2 146 090 B1**
(45) Veröffentlichungstag und Bekanntmachung des Hinweises auf die Patenterteilung: **23.01.2013**
(21) Anmeldenummer: 09007645.6
(22) Anmeldetag: 10.06.2009
(51) Int. Cl.: F03D 1/00

(54) **Demontage eines Getriebes einer Windenergieanlage**
Disassembly of a transmission of a wind power plant
Démontage d'une transmission d'éolienne

(30) Priorität: 15.07.2008 DE 102008033066
(43) Veröffentlichungstag der Anmeldung: 20.01.2010
(73) Patentinhaber: REpower Systems SE, 22297 Hamburg (DE)
(72) Erfinder: Blum, Oliver, 25554 Wilster (DE); Eusterbarkey, Carsten, 25813 Simonsberg (DE)
(74) Vertreter: Grebner, Christian Georg Rudolf

(56) Entgegenhaltungen:
- EP-A1- 1 677 032
- EP-A1- 1 808 600
- EP-A2- 1 101 934
- WO-A1-2007/096008
- WO-A2-2009/074859

## Beschreibung

Die Erfindung betrifft ein Verfahren zum Demontieren eines Getriebes einer Windenergieanlage, insbesondere einer Offshore-Windenergieanlage, mit mehreren Getriebestufen, sowie eine Verwendung einer Hebeeinrichtung in einer Gondel einer Windenergieanlage, insbesondere einer Offshore-Windenergieanlage.

Windenergieanlagen der Patentanmelderin sind unter der Bezeichnung 5M, MM92, MM82, MM70 sowie MD77 bekannt. Die Windenergieanlagen können sowohl auf dem Boden (onshore) oder in Gewässern (offshore) errichtet werden.

Bei Windenergieanlagen sind die Rotoren der Windenergieanlage über einen Triebstrang mit einem Getriebe und einem Generator verbunden. Hierbei weist die Windenergieanlage in der Regel eine Rotorwelle auf, an deren einem Ende die Rotorwelle mit dem Rotor und an ihrem anderen Ende mit dem Getriebe gekoppelt ist. Die Rotorblätter der Windenergieanlage sind an einer Rotornabe befestigt, die ihrerseits wiederum mit der Rotorwelle verbunden ist. Die Drehbewegung des Rotors wird über die Rotorwelle auf das Getriebe übertragen, so dass das Getriebe über einen generatorseitigen Abtrieb mit einem Generator in Wirkverbindung ist.

Bei gattungsgemäßen Windenergieanlagen kann das Getriebe mehrstufig ausgebildet sein, wobei das Getriebe in der Regel eine oder mehrere Planetenstufen sowie ggfs. eine oder weitere Getriebestufen (Stirnradstufen) aufweist.

Häufig ist die erste Getriebestufe eines mehrstufigen Getriebes bei gattungsgemäßen Windenergieanlagen als Planetenstufe ausgebildet, wobei der Rotor mit dem Planetenradträger oder dem Hohlrad der Planetenstufe gekoppelt ist. Hierbei besteht die Planetenstufe im Allgemeinen aus einem Sonnenrad, um das mehrere, mit dem Sonnenrad kämmende Planetenräder angeordnet sind, wobei die Planetenräder in einem Planetenradträger gelagert sind. Das Sonnenrad, die Planetenräder und Teile des Planetenradträgers sind von einem Hohlrad umgeben, wobei das Hohlrad so ausgebildet ist, dass es mit den Planetenrädern kämmt. Entsprechend der Getriebeübersetzungsrichtung wird entweder das Sonnenrad oder der Planetenradträger bzw. das Hohlrad angetrieben.

Beispielsweise sind in DE-B-103 57 026 sowie DE-B-103 34 448 Windenergieanlagen mit mehrstufigen Getrieben beschrieben.

Außerdem ist in EP-A-1 101 934 A2 ist ein Verfahren zum Ausbau eines Getriebes einer Windkraftanlage offenbart, wobei das Getriebe in einem auf einem Turm drehbar angebrachten Maschinengehäuse angeordnet ist. Dabei wird der im Maschinengehäuse untergebrachte Generator demontiert oder durch eine Bodenöffnung des Maschinengehäuses abgelassen. Alternativ hierzu wird der Generator innerhalb des Maschinengehäuses von der Bodenöffnung wegbewegt. Im Anschluss an die Entfernung des Generators im Bereich der Bodenöffnung wird mittels eines Bordkrans das Getriebe durch die Bodenöffnung im Maschinengehäuse abgelassen.

In EP-A-1 677 032 ist ein Verfahren zum Austausch von Dokumenten eines Umlaufrädergetriebes in einer Windenergieanlage offenbart. Hierbei weist ein Getriebe ein Gehäuse auf, welches aus einer antriebsseitigen Sektion, einer mittleren Sektion und einer abtriebsseitigen Sektion zusammengesetzt ist, wobei die antriebsseitige Sektion des Gehäuses mit einem Maschinenrahmen fest verbunden ist. Das Getriebe wird abwechselnd in einer der Trennebenen (zwischen den Sektionen) aufgetrennt, um an die auszutauschenden Komponenten heranzukommen. Hierbei ist die mittlere Sektion des Gehäuses stets mit mindestens einem der beiden äußeren Sektionen verbunden.

In WO-A-2009/074859 ist ein Verfahren zum Zusammensetzen eines Generators und/oder eines Getriebes in einer Windenergieanlage offenbart. Hierbei ist eine Vorrichtung mit einer Führungsschiene und einer mittels der Führungsschiene geführten Transportvorrichtung vorgesehen. Des Weiteren ist die Windenergieanlage mit einer Transportvorrichtung, die auf der Führungsschiene bewegbar ist, vorgesehen, wobei die Transportvorrichtung auf der Führungsschiene gleitend oder rollend ausgestaltet ist.

Ausgehend von diesem Stand der Technik besteht die Aufgabe der Erfindung darin, bei einer errichteten Windenergieanlage, insbesondere Offshore-Windenergieanlage, Wartungsmaßnahmen an einem mehrstufigen Getriebe auf einfache Weise durchzuführen, wobei der zeitliche und konstruktive Aufwand möglichst gering gehalten werden soll.

Gelöst wird diese Aufgabe durch ein Verfahren zum Demontieren eines Getriebes einer Windenergieanlage, insbesondere einer Offshore-Windenergieanlage, mit mehreren Getriebestufen, wobei das Getriebe in einer auf einem Turm der Windenergieanlage angeordneten Gondel aufgenommen ist oder wird, wobei die Getriebestufen miteinander in, vorzugsweise mechanischer, Wirkverbindung sind und die folgenden Verfahrensschritte ausgeführt werden:
a) es wird in der Gondel eine, vorzugsweise nicht-stationäre, Hebeeinrichtung oberhalb des mehrstufigen Getriebes errichtet,
b) die, insbesondere mechanische, Wirkverbindung einer ersten Getriebestufe mit einer zweiten Getriebestufe wird gelöst und
c) die erste Getriebestufe wird unter Verwendung der Hebeeinrichtung angehoben und von der zweiten Getriebestufe getrennt, wobei die erste Getriebestufe in die rotorabgewandte Seite der Gondel verlagert wird und gesichert wird,
wobei das Oberteil des Gehäuses der ersten Getriebestufe angehoben und in einem vorbestimmten Abstand zum Unterteil des Gehäuses vor Durchführung des Verfahrensschrittes c) angeordnet wird.

Die Erfindung beruht auf dem Gedanken, dass die Wartung eines mehrstufigen Getriebes bei einer errichteten Windenergieanlage, insbesondere Offshore-Windenergieanlage, im Maschinenhaus bzw. in der geschlossenen Gondel der Anlage durchgeführt wird, wobei insbesondere der Austausch eines im Getriebeinneren angeordneten Getriebelagers nach Trennung von zwei Getriebestufen durchgeführt werden kann. Hierbei erfolgt die Wartung bzw. die Durchführung der Wartungsmaßnahmen auf der bestehenden Anlage bzw. in der geschlossenen Gondel, ohne dass ein aufwändiger Austausch des gesamten Triebstrangs oder des Getriebes durch ein anderes komplettes Getriebe stattfindet. Hierzu wird eine Hebeeinrichtung zur Durchführung der Wartungsmaßnahmen oberhalb des Getriebes errichtet bzw. bereitgestellt, so dass die Hebeeinrichtung temporär bzw. nicht-stationär ausschließlich für die Durchführung der Wartungsmaßnahmen errichtet bzw. bereitgestellt oder zusammengebaut wird. Nach der Durchführung der Wartungsmaßnahmen wird die temporäre bzw. nicht permanente Hebeeinrichtung bevorzugt deinstalliert oder abgebaut. Vorteilhafterweise werden die Wartungsmaßnahmen bei einer geschlossenen Gondel durchgeführt, um insbesondere offshore, unabhängig von den Wetterbedingungen, arbeiten zu können.

Zur Bereitstellung bzw. Errichtung der Hebeeinrichtung oberhalb des mehrstufigen Getriebes werden bevorzugterweise die Bestandteile der Hebeeinrichtung einzeln bzw. separat (Stahlträger, Stützträger, Querstreben, Kettenzüge etc.) in das Maschinenhaus bzw. in die Gondel aufgeholt, wobei die Einzelteile der Hebeeinrichtung ohne Verwendung oder Nutzung eines externen Kranes in die Gondel aufholbar und montierbar sind. Dabei wird in diesem Zusammenhang unter einem externen Kran ein Mobilkran, z.B. Autokran, oder Offshore ein Schwimmkran oder eine Jack Up-Plattform mit Kran verstanden, also eine Kranvorrichtung, die nicht an der Tragstruktur einer errichteten Windenergieanlage angeordnet ist.

Im montierten Zustand ist die Hebeeinrichtung über dem Getriebe angeordnet, wobei die Hebeeinrichtung in einer Ausführungsform derart ausgebildet ist, dass die Hebeeinrichtung auf dem Getriebe sich abstützend und/oder neben dem Getriebe auf einem Maschinenrahmen befestigt ist bzw. wird. Die Hebeeinrichtung ist weiterhin vorteilhafterweise zur Aufnahme des Gewichts mindestens einer Getriebestufe ausgebildet, so dass unter Verwendung der errichteten Hebeeinrichtung mindestens eine Getriebestufe mittels der Hebeeinrichtung anhebbar und von der benachbarten Getriebestufe trennbar ist.

Eine verbesserte Handhabung ergibt sich dadurch, dass nach der Verlagerung der Getriebestufe auf die rotorabgewandte Seite der Gondel die Getriebestufe durch entsprechende mechanische Haltemittel gesichert wird, so dass ein sicherer Austausch bzw. eine Wartung bzw. ein Austausch von Bauteilen an den voneinander getrennten und zugänglichen Seiten der Getriebestufen ermöglicht wird. Während der Wartungsarbeiten befindet sich die Windenergieanlage im Stillstand, wobei vorteilhafterweise der Rotor arretiert wird.

Überdies ist in einer vorteilhaften Ausführungsform vorgesehen, dass vor dem Anheben der ersten Getriebestufe und/oder Trennen der ersten Getriebestufe von der zweiten Getriebestufe (Verfahrensschritt c)) ein Bauteil der zweiten Getriebestufe mit der Halteeinrichtung fixiert wird, wobei insbesondere das zu fixierende oder fixierte Bauteil der zweiten Getriebestufe als eine Welle oder ein Zahnrad oder ein Lager oder ein Bauteil einer Planetenstufe, vorzugsweise Planetenträger oder Planetenrad oder Hohlrad oder Sonnenrad, ausgebildet ist. Hierbei ist es möglich, Planetenräder, Planetenlager, Sonnenräder oder Wellenkupplungen oder ähnliche Bauteile im Getriebeinneren auszutauschen, die nur dann zugänglich sind, wenn die benachbarten Getriebestufen des Getriebes voneinander getrennt werden oder sind.

Vorzugsweise wird das Oberteil des Gemittels Abstandshalter oberhalb des Unterteils des Gehäuses fixiert wird und/oder das Unterteil gemeinsam mit dem Oberteil in die rotorabgewandte Seite der Gondel verlagert wird. Hierdurch wird beispielsweise der Gehäusedeckel einer Stirnradstufe nach oder bevorzugt vor Lösen der mechanischen Wirkverbindung mit der benachbarten Getriebestufe angehoben und mit Abstandshaltern in einem vorbestimmten Abstand zum Unterteil des Gehäuses fixiert. Dadurch ergibt sich insbesondere die erforderliche Zugänglichkeit zu mechanischen Teilen der Getriebestufe, um ein Bauteil der zweiten Getriebestufe mit einer Halteeinrichtung zu fixieren.

Außerdem zeichnet sich das Verfahren in einer Weiterbildung dadurch aus, dass vor Durchführung des Verfahrensschrittes c) eine Kupplung zwischen dem Getriebe und einem Generator entfernt wird und/oder eine Energieversorgungseinrichtung eines Rotorblattverstellsystems demontiert wird und/oder die, insbesondere mechanische, Wirkverbindung eines Rotorblattverstellsystems in die Rotornabe unterbrochen wird.

Darüber hinaus ist es günstig, wenn als erste Getriebestufe eine Stirnradstufe von dem Getriebe verlagert wird, wobei insbesondere nach Verlagerung der ersten Getriebestufe ein zugängliches Bauteil im Getriebeinneren ausgetauscht wird, wobei insbesondere das auszutauschende Bauteil ein Wälzlager, vorzugsweise ein Kegelrollenwälzlager, ist.

Bei einem Wälzlager einer Getriebestufe handelt es sich um ein Kegelrollenlager, welches beispielsweise zwischen einer Planetenstufe und einer Stirnradstufe eines Getriebes montiert ist. Das Kegelrollenlager trägt dabei die Axiallasten, die aus der Schrägverzahnung der beiden Planetenstufen resultieren. Durch das Abtrennen einer Stirnradstufe (als erste Getriebestufe) von einer benachbarten Planetenstufe des Getriebes, wird das Kegelrollenlager zwischen der Planetenstufe und der Stirnradstufe zugänglich und kann bei einer Beschädigung entsprechend auf der Anlage ausgetauscht werden. Hierzu wird der Planetenträger der Planetenstufe vorab fixiert, da sich das Kegelrollenlager in der Stirnradstufe abstützt und der Planetenträger somit beim Abtrennen der Stirnradstufe nicht mehr gelagert ist.

Des Weiteren ist es bevorzugt, wenn nach der Demontage des Getriebes, und insbesondere nach Austausch eines Bauteils im Getriebeinneren, z.B. eines Kegelrollenlagers, das Getriebe durch Ausführung der entsprechenden invers ausgeführten Verfahrensschritte in umgekehrter Reihenfolge zusammengesetzt wird. Hierdurch wird das Getriebe wieder in einen betriebsbereiten Zustand zusammengebaut, wobei der Rückbau in umgekehrter Reihenfolge der Verfahrensschritte bei der Demontage erfolgt.

Durch Ausführung der Verfahrensschritte und unter Verwendung der leicht erreichbaren Hebeeinrichtung ist es möglich, bei Schäden am Getriebe einer Offshore-Windenergieanlage auf einfache Weise Reparaturen auf der Anlage umgehend durchzuführen, wobei das beschädigte Getriebe nicht ausgetauscht werden muss. Vielmehr verbleibt das Getriebe bzw. der Triebstrang in der, vorzugsweise geschlossenen Gondel, so dass nach Durchführung der Wartungsmaßnahmen die Offshore-Windenergieanlage wieder für die Energieerzeugung zur Verfügung steht.

Darüber hinaus wird die Aufgabe gelöst durch eine Anordnung bzw. eine Verwendung einer Hebeeinrichtung in einer Gondel einer Windenergieanlage, insbesondere einer Offshore-Windenergieanlage, zur Demontage oder Montage eines in der Gondel angeordneten Getriebes mit mehreren Getriebestufen und zur Durchführung des voranstehend beschriebenen Verfahrens, wobei die Hebeeinrichtung zur Durchführung der Demontage oder Montage des Getriebes, vorzugsweise temporär, in der Gondel errichtet ist oder wird, wobei die Hebeeinrichtung aus mehreren Hebeeinrichtungsteilen zusammengesetzt ist oder wird und wobei die Hebeeinrichtung im montierten Zustand über dem Getriebe angeordnet ist.

Gemäß der Erfindung ist dabei die verwendete Hebeeinrichtung nur temporär, d.h. während eines Stillstands der Windenergieanlage oberhalb des Getriebes und während der Wartungsarbeiten am Getriebe errichtet, so dass unter Verwendung der errichteten Hebeeinrichtung oberhalb des Getriebes eine Getriebestufe von einer zweiten Getriebestufe auf einfache Weise voneinander getrennt wird. Beispielsweise wird eine Stirnradstufe nach hinten bzw. auf die Generatorseite, d.h. auf die rotorabgewandte Seite, nach Lösen der mechanischen Wirkverbindung zwischen den beiden Getriebestufen verlagert.

Vorzugsweise ist die Hebeeinrichtung auf dem Getriebe und/oder neben dem Getriebe auf einem Maschinenrahmen in der Gondel befestigt, so dass die Hebeeinrichtung sich auf einer Planetenstufe bzw. einer Getriebestufe des zusammengesetzten Getriebes auf der Oberseite des Getriebegehäuses abstützt. Darüber hinaus ist oder wird die Hebeeinrichtung seitlich neben der zu trennenden Getriebestufe, z.B. einer Stirnradstufe, beispielsweise auf einen Maschinenträger, abgestützt.

Bevorzugterweise weist die Hebeeinrichtung bewegbare Hebemittel auf, wobei insbesondere die Hebemittel entlang einer oder mehrerer Traversen eines Rahmengestells bewegbar sind und/oder die Hebemittel als mehrere Kettenzüge ausgebildet sind, so dass insbesondere eine erste Getriebestufe nach Lösen der Wirkverbindung mit einer zweiten Getriebestufe in die rotorabgewandte Seite der Gondel verlagert wird oder verlagerbar ist. Durch die bewegbaren bzw. horizontal verfahrbaren Hebemittel, beispielsweise in Form von höhenverstellbaren Kettenzügen, wird eine im Wesentlichen horizontale Verlagerung der abgetrennten Getriebestufe vom Restgetriebe ermöglicht. Dabei sind die Kettenzüge vorzugsweise in Traversen bewegbar, wobei die Traversen im Wesentlichen parallel zu den Seitenwänden der Gondel bzw. parallel zur Längserstreckung der Gondel ausgerichtet sind. Der Querträger eines Rahmengestells der Hebeeinrichtung ist dabei quer zur Längserstreckung des Maschinenhauses bzw. der Gondel angeordnet. Seitlich ist der Querträger des Rahmengestells durch vertikal angeordnete bzw. vertikal ausgerichtete Träger aufgestützt.

Ferner zeichnet sich die Hebeeinrichtung dadurch aus, dass die als Kettenzüge ausgebildeten Hebemittel derart ausgebildet sind, dass diese bei Betätigung, vorzugsweise gleichzeitig, in der Höhe anhebbar oder absenkbar sind und/oder dass die Kettenzüge in der Höhe einstellbar sind. Dadurch ist es möglich, dass durch eine gemeinsame Betätigung der Kettenzüge oder dergleichen die mindestens eine Getriebestufe gleichmäßig anhebbar ist. Außerdem können in einer Ausführungsform die Kettenzüge individuell betätigbar sein, so dass durch eine individuelle Betätigung die mindestens eine Getriebestufe in zwei Richtungen neigbar ist.

Bevorzugterweise weist die Hebeeinrichtung ein, insbesondere zerlegbares, Rahmengestell mit einem Querträger und zwei an dem Querträger vorgesehene Stützträger auf, wobei insbesondere an dem Querträger die eine oder mehrere Traversen mit den Hebemitteln angeordnet sind. Vorzugsweise sind dabei die Traversen am Querträger abgewandten Ende auf dem Getriebe bzw. einer Planetenstufe des Getriebes abgestützt angeordnet. Die Stützträger des Querträgers, zwischen denen die Traversen am Querträger befestigt sind, sind dabei bevorzugterweise neben dem Getriebe auf dem Maschinenträger in der Gondel angeordnet. Die Stützträger sind dabei vorzugsweise vertikal angeordnet, während der Querträger quer zur Längserstreckung, insbesondere senkrecht zur Längserstreckung der Gondel angeordnet ist. Außerdem sind günstigerweise die Traversen am Querträger parallel zur Längserstreckung oder entlang der Längserstreckung der Gondel, vorzugsweise horizontal, ausgerichtet.

Bevorzugterweise wird die Hebevorrichtung über eine Befestigungsplatte an der Oberseite der abzutrennenden Getriebestufe bzw. Stirnradstufe befestigt, die über vorhandene Gewindelöcher im Gehäuseoberteil des Getriebes bzw. der Getriebestufe verschraubt wird. Die Befestigungsplatte wird hierbei zum Anheben des Gehäuseoberteils der abzutrennenden Getriebestufe als auch zum Heben der gesamten Getriebestufe verwendet.

Zum Trennen der Getriebestufen können zusätzlich zur Hebevorrichtung weitere Kettenzüge oder dergleichen verwendet werden, die horizontal angreifen, während die Kettenzüge der Hebeeinrichtung im Wesentlichen senkrecht angreifen.

Darüber hinaus ist es durch die Kettenzüge der Hebeeinrichtung möglich, die angehobene und verlagerte bzw. zu verlagernde Getriebestufe durch eine entsprechende Betätigung der Kettenzüge in der Höhe und in der Neigung zu verstellen bzw. einzustellen.

Dadurch, dass die Hebeeinrichtung in handhabbare Einzelteile zerlegbar bzw. aus den Einzelteilen zusammengesetzt werden kann, wird eine temporäre, d.h. nicht permanente, d.h. nicht-stationäre, Hebeeinrichtung bereitgestellt, um ein mehrstufiges Getriebe in einer geschlossenen Gondel einer bestehenden Windenergieanlage zu demontieren bzw, nach Durchführung der Wartungsarbeiten zu montieren.

Unter Verwendung der nicht permanenten Hebeeinrichtung ist es möglich, beispielsweise ein Kegelrollenlager zwischen zwei Getriebestufen auszutauschen, wobei es aufgrund der Schrägverzahnung von Zahnrädern der Getriebestufen für den Trennvorgang bzw. für die Trennung der mechanischen Wirkverbindung zwischen den Getriebestufen erforderlich sein kann, eines oder mehrere Zahnräder einer Getriebestufe geringfügig zu drehen, bevorzugterweise über einen Hebel an einer schnellen Welle der Getriebestufe (Getriebeausgang). Der Austausch eines Kegelrollenlagers kann dann unter Verwendung von Abdrückeinrichtungen und/oder unter Einwirkung von Wärme zum Aufweiten von Lagerringen, beispielsweise mittels eines Acetylenbrenners, erfolgen. Dabei können neben den Lagerringen montierte Hilfsanschläge ein Herunterfallen des Lagers verhindern bzw. die Demontage des Getriebes erleichtern. Bevorzugterweise ist oder wird das demontierte bzw. defekte Lager, das ausgetauscht wird, genauestens vermessen, um ein entsprechendes Ersatzlager mit gleichen Toleranzen für den Wiedereinbau bereitzustellen. Die Vermessung kann dabei vor dem Einbau eines ersten Lagers erfolgen und dokumentiert werden.

Die Erfindung wird nachstehend ohne Beschränkung des allgemeinen Erfindungsgedankens anhand von Ausführungsbeispielen unter Bezugnahme auf die Zeichnungen exemplarisch beschrieben, wobei bezüglich aller im Text nicht näher erläuterten erfindungsgemäßen Einzelheiten ausdrücklich auf die schematischen Zeichnungen verwiesen wird. Es zeigen:
- Fig. 1: eine schematische Darstellung einer Windenergieanlage;
- Fig. 2: eine schematische Querschnittsansicht einer Gondel einer Windenergieanlage und
- Fig. 3a - 3c: jeweils schematisch verschiedene Ansichten einer in der Gondel errichtbaren Hebeeinrichtung zur Verlagerung einer Getriebestufe eines Getriebes einer Windenergieanlage.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

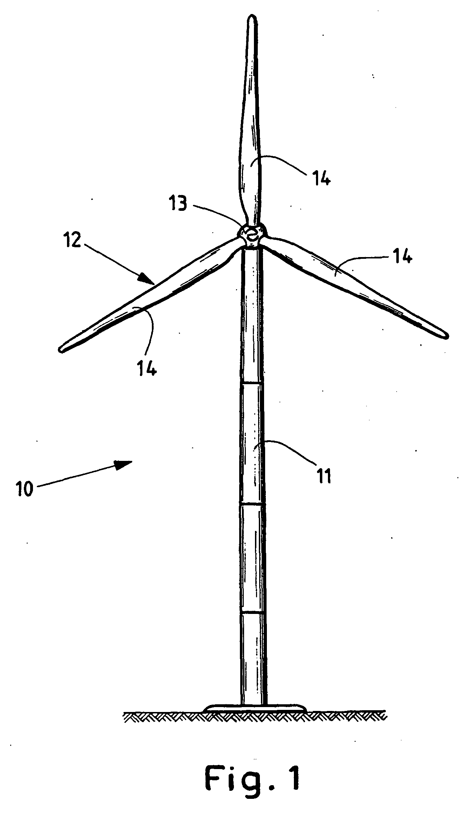

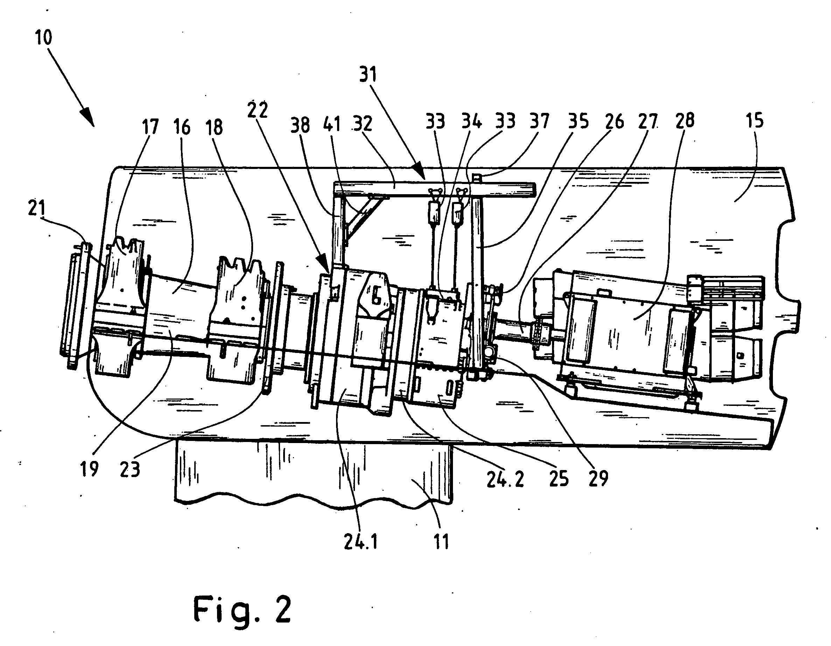

Fig. 1 zeigt eine schematische Darstellung einer Windenergieanlage 10. Die Windenergieanlage 10 weist einen Turm 11 auf und einen Rotor 12, der drei Rotorblätter 14 umfasst, die auf einer Rotornabe 13 angebracht sind. Bei Windeinfall dreht sich der Rotor 12 in an sich bekannter Weise. Hierdurch kann Leistung von einem an den Rotor 12 bzw. an die Rotornabe 13 angeschlossenen Generator in einem auf dem Turm 11 und hinter dem Rotor 12 angeordneten Maschinenhaus (vgl. Fig. 2) erzeugt werden und in ein Verbrauchernetz abgegeben werden.

Fig. 2 zeigt schematisch eine Querschnittsansicht eines auf dem Turm 11 angeordneten Maschinenhauses 15 bzw. einer Gondel der Windenergieanlage 10. Im rotorseitigen Bereich des Maschinenhauses 15 ist eine Rotorwelle 16 in zwei Lagerböcken 17, 18 auf einem leicht geneigten Maschinenrahmen 19 gelagert. Die Rotorwelle 16 ragt zur Rotorseite aus dem Maschinenhaus 15 hinaus und weist auf der Außenseite einen Rotorflansch 21 auf, an dem der Rotor 12 bzw. die Rotornabe 13 eines Rotors befestigt ist (vgl. Fig. 1).

Die dem Rotor 12 abgewandte Seite der Rotorwelle 16 ist im Maschinenhaus 15 mit einem mehrstufigen Getriebe 22 verbunden, wobei zwischen dem Lagerbock 18 und der Eingangsseite des Getriebes 22 eine Arretiervorrichtung 23 vorgesehen ist, so dass sich der Rotor 12 während des Stillstands zu Wartungsarbeiten an der Windenergieanlage 10 arretieren lässt bzw. arretiert wird.

Das mehrstufige Getriebe 22 besteht aus zwei hintereinander angeordneten Planetenstufen 24.1, 24.2, die in mechanischer Wirkverbindung miteinander sind. Darüber hinaus steht die zweite Planetengetriebestufe 24.2 mit einer hinteren Stirnradstufe 25 des Getriebes 22 in Wirkverbindung.

Durch das mehrstufige Getriebe 22 wird die niedrige Drehzahl der Rotorwelle 16 über mehrere Stufen in eine hohe Drehzahl einer Abtriebswelle umgewandelt, die über eine Kupplung 27 einen Generator 28 antreibt. Im Rahmen der Erfindung ist es möglich, dass das mehrstufige Getriebe 22 auch eine Planetenstufe und zwei Stirnradstufen oder beliebige andere Kombinationen von Stufen aufweisen kann.

Auf der generatorseitigen bzw. rotorabgewandten Seite einer Abtriebswelle der Stirnradstufe 25 ist eine Rotorbremse 26 sowie die Kupplung bzw. Generatorkupplung 27 angeordnet. Die Kupplung 27 ist dabei mit der Generatorwelle verbunden. Unterhalb der Rotorbremse 26 ist in Verlängerung der Rotorwellenachse eine Schleifringeinheit 29 für die Blattverstellung der Rotorblätter 14 (Fig. 1) angeordnet. Die Schleifringeinheit 29 bildet zusammen mit einem durch das Getriebe 22 bis in die Rotorwelle 26 verlaufenden Kabelrohr die Energieversorgungseinrichtung für die Rotornabe 13 (Fig. 1).

Oberhalb des Getriebes 22 ist eine als Rahmengestell ausgebildete Hebeeinrichtung 31 angeordnet, die sich an ihrem rotorseitigen Ende auf dem Getriebe 22 bzw. auf der ersten Planetenstufe 24.1 abstützt. Am generatorseitigen Ende ist die Hebeeinrichtung 31 seitlich neben der Stirnradstufe 25 auf dem Grundrahmen bzw. auf dem Maschinenrahmen 19 befestigt.

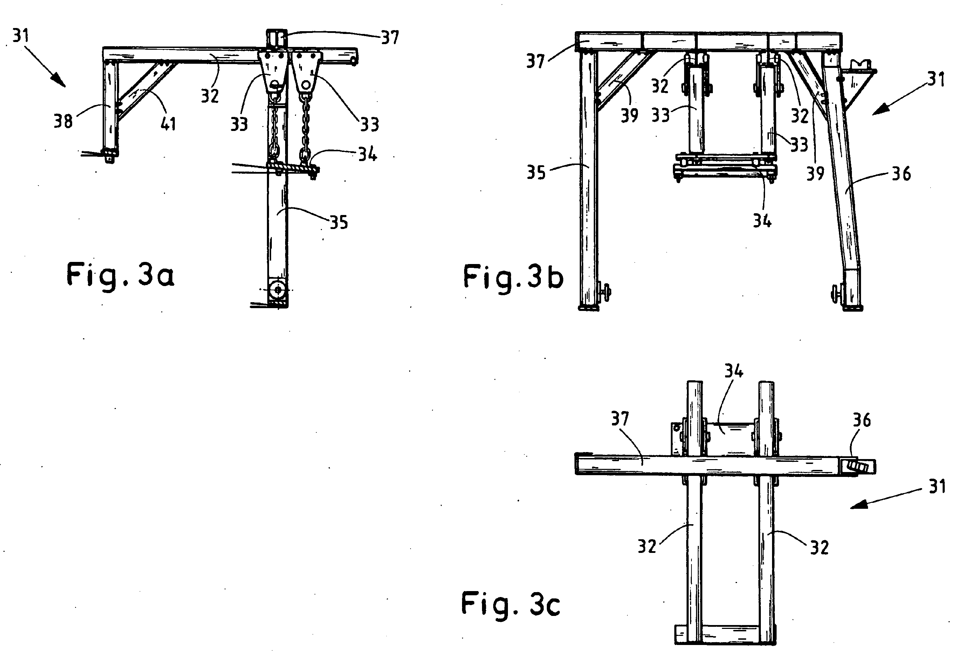

Die Figuren 3a bis 3c zeigen die Hebeeinrichtung 31 schematisch in verschiedenen Ansichten unter Weglassung der im Maschinenhaus 15 angeordneten Komponenten des Triebstrangs einer Windenergieanlage.

Fig. 3a zeigt eine Seitenansicht der Hebeeinrichtung 31. In Fig. 3b ist eine Frontansicht der Hebeeinrichtung 31 dargestellt und in Fig. 3c eine Draufsicht auf die Hebeeinrichtung 31.

Die Hebeeinrichtung 31 weist zwei senkrecht zur Darstellungsebene in Fig. 2 und Fig. 3a entlang der Längserstreckung des Maschinengehäuses 15 nebeneinander liegende bzw. verlaufende Traversen 32 auf, auf denen je zwei schematisch eingezeichnete Kettenzüge als Hebemittel bewegbar, vorzugsweise horizontal verfahrbar, angeordnet sind. Die vier Kettenzüge, jeweils zwei Kettenzüge 33 pro Traverse 32, sind über eine Befestigungsplatte 34 mit dem Oberteil der Stirnradstufe 25 verbunden.

Die Hebeeinrichtung 31 ist aus mehreren Einzelteilen bzw. Stahlträgern zusammengesetzt, die auf manuelle Weise oder mittels eines, vorzugsweise fest installierten, Bordkrans der Windenergieanlage 10 handhabbar sind und in Einzelteilen in das Maschinenhaus 15 aufholbar sind. Dies bedeutet, dass sowohl das Gewicht der Einzelteile bzw. der Träger als auch deren Abmessungen starken Begrenzungen unterliegen.

Die Hebeeinrichtung 31 weist zwei seitlich an der Getriebestufe 25 auf dem Maschinenrahmen 19 senkrecht angeordnete Stützen 35, 36 auf, die bei Errichtung der Hebevorrichtung 31 zuerst einzeln aufgestellt werden und mit einem horizontalen Querträger 37 am oberen Ende miteinander verbunden werden, so dass die Stützen 35, 36 in Verbindung mit dem Querträger 37 nach Art eines umgedrehten "U" ausgebildet sind. Anschließend werden die horizontalen Traversen 32 an der Unterseite des Querträgers 37 angeordnet, wobei die rotorseitigen Enden der der Traversen 32 über senkrecht angeordnete Stützen 38 auf der ersten Getriebestufe 24.1 abgestützt werden.

Zur Versteifung der Verbindungen der Stützen 35, 36 mit dem Querträger 37 sind in den Eckbereichen entsprechende Diagonal- Querstreben 39 vorgesehen (vgl. Fig. 3b). Darüber hinaus sind auch zur mechanischen Stabilisierung der Traversen 32 im Eckbereich zu den rotorseitigen Stützen 38 Diagonal-Längsstreben 41 vorgesehen.

Wie aus Fig. 3a zu erkennen ist, sind die unteren Fußteile der Stützen 35, 38 am unteren Ende mit einer Neigung ausgebildet, die der Neigung des Maschinenrahmens 19 im Maschinenhaus 15 entspricht, so dass bei senkrechter Anordnung der Stützen 35, 36, 39 die Traversen 32 und der Querträger 37 waagerecht angeordnet sind.

Zur Demontage der hinteren Stirnradstufe 25 von der benachbarten zweiten Planetenstufe 24.2 wird die Kupplung 27 zwischen dem Getriebe 22 und dem Generator 28 entfernt. Darüber hinaus werden die Pitchdurchführung sowie die Energieversorgungseinrichtung für die Rotornabe vor der Demontage des Getriebes 22, vorzugsweise vollständig, demontiert werden. Hierzu ist aus Platzgründen das Kabelrohr, das durch das Getriebe 22 bis in die Rotorwelle 16 verläuft, mehrteilig ausgeführt.

Anschließend wird die Befestigungsplatte 34 auf der Stirnradstufe 25 montiert, so dass der Deckel der Stirnradstufe 25 angehoben wird und das Oberteil der Stirnradstufe 25 mit Abstandshalter auf den unteren Teil der Stirnradstufe 25 fixiert wird. Danach werden durch den entstandenen Spalt entsprechende Bauteile bzw. Planetenträger der zweiten Planetenstufe 24.2 mittels einer Halteeinrichtung oder einer Halterung oder dergleichen gehalten.

Im Anschluss daran wird das Unterteil der Stirnradstufe 25 von der zweiten Planetenstufe 24.2 gelöst und getrennt, so dass die Stirnradstufe 25 durch Verfahren der Kettenzüge 33 entlang der Traverse 32 gemeinsam in Richtung Generator verlagert wird. Nach der Verlagerung wird die Stirnradstufe 25 mit Abstandshaltern oder dergleichen fixiert bzw. gesichert. Anschließend erfolgt beispielsweise der Austausch eines Kegelrollenlagers, wobei nach erfolgtem Austausch des Lagers der Rückbau in umgekehrter Reihenfolge der Verfahrensschritte erfolgt.

Mittels der Hebeeinrichtung 31 lassen sich einzelne Stufen eines Getriebes bzw. des Getriebes 22 voneinander trennen, unabhängig davon, ob es sich um ein Getriebe mit einer Planetenstufe und mehreren Stirnradstufen oder mehreren Planetenstufen und einer Stirnradstufe handelt.

Bei der in Fig. 2 dargestellten Ausführungsform eines Getriebes 22 sind zwei Planetenstufen vorgesehen, wobei nach der ersten Planetenstufe 24.1 eine zweite, schmaler bauende zweite Planetenstufe 24.2 vorgesehen ist. Die zweite Planetenstufe 24.2 steht generatorseitig mit einer Stirnradstufe 25 in Verbindung.

Zwischen der zweiten Planetenstufe 24.2 und der generatorseitigen Stirnradstufe 25 ist im Inneren des Getriebes ein Kegelrollenlager angeordnet, welches den aus der Schrägverzahnung der ersten und zweiten Planetenstufe resultierenden Axialschub aufnimmt und sich im Gehäuse der Stirnradstufe 25 abstützt. Durch die Trennung bzw. Verlagerung der Stirnradstufe 25 unter Verwendung der Hebeeinrichtung 31 von der zweiten Planetenstufe 24.2 wird der Zugang zu dem Kegelrollenlager und somit dessen Austausch bzw. Reparatur im Maschinenhaus 15 der Windenergieanlage 10 ermöglicht.

Dadurch wird erreicht, dass die Demontage eines mehrstufigen Getriebes sowie die Reparatur des Getriebes auf der Anlage bzw. im Maschinenhaus 15 erfolgen, so dass ein kompletter Austausch des gesamten Getriebes entfällt.

Nach Durchführung der Wartungsarbeiten und Montage des zerlegten Getriebes wird die Hebeeinrichtung 31 bevorzugt wieder in ihre handhabbaren Einzelteile zerlegt und ggf. aus dem Maschinenhaus 15 entfernt.

Im Rahmen der Erfindung ist es ebenso möglich, dass unter Verwendung der Hebeeinrichtung 31 die erste Planetenstufe 24.1 und die zweite Planetenstufe 24.2 voneinander getrennt werden können, um Reparaturarbeiten an bzw. in der ersten oder der zweiten Planetenstufe 24.2 durchzuführen.

### Bezugszeichenliste

- 10: Windenergieanlage
- 11: Turm
- 12: Rotor
- 13: Rotornabe
- 14: Rotorblätter
- 15: Maschinenhaus
- 16: Rotorwelle
- 17: Lagerbock
- 18: Lagerbock
- 19: Maschinenrahmen
- 21: Rotorflansch
- 22: mehrstufiges Getriebe
- 23: Arretiervorrichtung
- 24.1: erste Planetenstufe
- 24.2: zweite Planetenstufe
- 25: Stirnradstufe
- 26: Rotorbremse
- 27: Kupplung
- 28: Generator
- 29: Schleifringeinheit
- 31: Hebevorrichtung
- 32: Traverse
- 33: Kettenzug
- 34: Befestigungsplatte
- 35: Stütze
- 36: Stütze
- 37: Querträger
- 38: Stütze
- 39: Diagonal-Querstrebe
- 41: Diagonal-Längsstrebe

## Patentansprüche

1. Verfahren zum Demontieren eines Getriebes einer Windenergieanlage (10), insbesondere einer Offshore-Windenergieanlage, mit mehreren Getriebestufen (24.1, 24.2, 25), wobei das Getriebe (22) in einer auf einem Turm (11) der Windenergieanlage (10) angeordneten Gondel (15) aufgenommen ist oder wird, wobei die Getriebestufen (24.1, 24.2, 25) miteinander in Wirkverbindung sind und die folgenden Verfahrensschritte ausgeführt werden:
a) es wird in der Gondel (15) eine, vorzugsweise nicht-stationäre, Hebeeinrichtung (31) oberhalb des mehrstufigen Getriebes (22) errichtet,
b) die Wirkverbindung einer ersten Getriebestufe (25) mit einer zweiten Getriebestufe (24.2) wird gelöst,
c) die erste Getriebestufe (25) wird unter Verwendung der Hebeeinrichtung (31) angehoben und von der zweiten Getriebestufe (24.2) getrennt, wobei die erste Getriebestufe (25) in die rotorabgewandte Seite der Gondel (15) verlagert wird und gesichert wird,
wobei das Oberteil des Gehäuses der ersten Getriebestufe (25) angehoben und in einem vorbestimmten Abstand zum Unterteil des Gehäuses vor Durchführung des Verfahrensschrittes c) angeordnet wird.

2. Verfahren nach Anspruch 1, **dadurch gekennzeichnet, dass** vor dem Anheben der ersten Getriebestufe (25) und/oder Trennen der ersten Getriebestufe (25) von der zweiten Getriebestufe (24.2) (Verfahrensschritt c)) ein Bauteil der zweiten Getriebestufe (24.2) mit einer Halteeinrichtung fixiert wird, wobei insbesondere das zu fixierende oder fixierte Bauteil der zweiten Getriebestufe (24.2) als eine Welle oder ein Zahnrad oder ein Lager oder ein Bauteil einer Planetenstufe, vorzugsweise Planetenträger oder Planetenrad oder Hohlrad oder Sonnenrad, ausgebildet ist.

3. Verfahren nach Anspruch 1 oder 2, **dadurch gekennzeichnet, dass** das Oberteil des Gehäuses mittels Abstandshalter oberhalb des Unterteils des Gehäuses fixiert wird und/oder das Unterteil gemeinsam mit dem Oberteil in die rotorabgewandte Seite der Gondel verlagert wird.

4. Verfahren nach einem der Ansprüche 1 bis 3, **dadurch gekennzeichnet, dass** vor Durchführung des Verfahrensschrittes c) eine Kupplung zwischen dem Getriebe (22) und einem Generator (28) entfernt wird und/oder eine Energieversorgungseinrichtung eines Rotorblattverstellsystems demontiert wird und/oder die Wirkverbindung eines Rotorblattverstellsystems in die Rotornabe (13) unterbrochen wird.

5. Verfahren nach einem der Ansprüche 1 bis 4, **dadurch gekennzeichnet, dass** als erste Getriebestufe (25) eine Stirnradstufe (25) von dem Getriebe (22) verlagert wird, wobei insbesondere nach Verlagerung der ersten Getriebestufe (25) ein zugängliches Bauteil im Getriebeinneren ausgetauscht wird, wobei insbesondere das auszutauschende Bauteil ein Wälzlager, vorzugsweise ein Kegelrollenlager, ist.

6. Verfahren nach einem der Ansprüche 1 bis 5, **dadurch gekennzeichnet, dass** nach der Demontage des Getriebes (22), und insbesondere nach Austausch eines Bauteils im Getriebeinneren, das Getriebe (22) durch Ausführung der entsprechenden invers ausgeführten Verfahrensschritte in umgekehrter Reihenfolge zusammengesetzt wird.

7. Verwendung einer Hebeeinrichtung (31) in einer Gondel einer Windenergieanlage (10), insbesondere einer Offshore-Windenergieanlage, zur Durchführung des Verfahrens nach einem der Ansprüche 1 bis 6 zur Demontage oder Montage eines in des Gondel angeordneten Getriebes mit mehreren Getriebestufen wobei die Hebeeinrichtung (31) zur Durchführung der Demontage oder Montage des Getriebes (22), vorzugsweise temporär, in der Gondel (15) errichtet ist oder wird, wobei die Hebeeinrichtung (31) aus mehreren Hebeeinrichtungsteilen zusammengesetzt ist oder wird, wobei die Hebeeinrichtung (31) im montierten Zustand über dem Getriebe (22) angeordnet ist.

8. Verwendung nach Anspruch 7, **dadurch gekennzeichnet, dass** die Hebeeinrichtung (31) auf dem Getriebe (22) und/oder neben dem Getriebe (22) auf einem Maschinenrahmen (19) in der Gondel (15) befestigt ist.

9. Verwendung nach Anspruch 7 oder 8, **dadurch gekennzeichnet, dass** die Hebeeinrichtung (31) bewegbare Hebemittel (33) aufweist, wobei insbesondere die Hebemittel (33) entlang eines oder mehrerer Traversen (32) eines Rahmengestells bewegbar sind und/oder die Hebemittel (33) als mehrere Kettenzüge (33) ausgebildet sind, so dass insbesondere eine erste Getriebestufe (24.1) nach Lösen der Wirkverbindung mit einer zweiten Getriebestufe (24.2) in die rotorabgewandte Seite der Gondel (15) verlagert wird oder verlagerbar ist.

10. Verwendung nach Anspruch 9, **dadurch gekennzeichnet, dass** die als Kettenzüge (33) ausgebildeten Hebemittel (33) derart ausgebildet sind, dass diese bei Betätigung, vorzugsweise gleichzeitig, in der Höhe anhebbar oder absenkbar sind und/oder dass die Kettenzüge (33) in der Höhe einstellbar sind.

11. Verwendung nach einem der Ansprüche 7 bis 10, **dadurch gekennzeichnet, dass** die Hebeeinrichtung (31) ein, insbesondere zerlegbares, Rahmengestell mit einem Querträger (37) und zwei an dem Querträger (37) vorgesehene Stützträger (35, 36) aufweist, wobei insbesondere an dem Querträger (37) die eine oder mehrere Traversen (32) mit den Hebemitteln (33) angeordnet sind.

## Claims

1. Method of disassembling a transmission system of a wind energy installation (10), particularly an offshore wind energy installation, with a plurality of transmission stages (24.1, 24.2, 25), wherein the transmission system (22) is accommodated in an enclosure (15) arranged on a tower (11) of the wind energy installation, wherein the transmission stages (24.1, 24.2, 25) are operatively connected to one another and the following method steps are performed:
a) a preferably non-stationary, lifting device (31) is installed in the enclosure (15) above the multistage transmission system (22),
b) the operative connection of a first transmission stage (25) with a second transmission (24.2) is released,
c) the first transmission stage (25) is lifted with the use of the lifting device (31) and separated from the second transmission stage (24.2) wherein the first transmission stage (25) is transferred to the side of the housing remote from the rotor and secured,
Wherein the upper portion of the housing of the first transmission stage (25) is lifted and is disposed at a predetermined distance from the lower portion of the housing before performing method step c).

2. A method as claimed in claim 1, **characterised in that** before the first transmission stage (25) is lifted or seperated from the second transmission stage (24.2) (method step c)), a component of the second transmission stage (24.2) is fixed in position with a retaining device, wherein, in particular, the component fixed in position or to be fixed in position of the second transmission stage (24.2) is constructed in the form of a shaft or a gear wheel or a bearing or a component of the planetary stage, preferably a planet carrier or planet gear or annulus gear or a sun gear.

3. A method as claimed in claim 1 or 2, **characterised in that** the upper portion of the housing is fixed in position above the lower portion of the housing by means of spacers and/or the lower portion is transferred together with the upper portion into the side of the enclosure remote from the rotor.

4. A method as claimed in one of claims 1 to 3. **characterised in that** before performing method step c) a coupling between the transmission system (22) and a generator (28) is removed and/or an energy supply device of a rotor blade adjustment system is demounted and/or the operative connection of a rotor blade adjustment system into the rotor hub (13) is interrupted.

5. A method as claimed in one of claims 1 to 4, **characterised in that** a spur gear stage (25) constituting the first transmission stage (25) is moved away from the transmission system (22), whereby, in particular, after the movement of the first transmission stage (25) an accessible component is replaced in the interior of the transmission system, wherein, in particular the component to be replaced is a roller bearing, preferably a tapered roller bearing.

6. A method as claimed in one of claims 1 to 5, **characterised in that** after the demounting of the transmission system (22), particularly after the replacement of a component in the interior of the transmission system, the transmission system (22) is assembled by carrying out the corresponding inversely performed method steps in the reverse sequence.

7. The use of a lifting device (31) in an enclosure of a wind energy installation (10), particularly an offshore wind energy installation, for carrying out the method as claimed in one of claims 1 to 6 for disassembling or assembling a transmission system with a plurality of transmission stages disposed in the enclosure, wherein the lifting device (31), for carrying out the disassembly of the assembly of the transmission system (22), is installed in the enclosure (15), preferably temporarily wherein the lifting device (31) is composed of a plurality of lifting device components, wherein the lifting device (31) is arranged, in the installed state, above the transmission system (22).

8. The use as claimed in claim 7, **characterised in that** the lifting device (31) is secured to the transmission system (22) and/or adjacent to the transmission system (22) on a machine frame (19) in the enclosure (15).

9. The use as claimed in claim 7 or 8, **characterised in that** the lifting device (31) includes movable lifting means (33) wherein, in particular, the lifting means (33) are movable along one or more cross beams (32) of a frame and/or the lifting means (33) are constructed in the form of a plurality of chain hoists, so that, in particular, a first transmission stage (24.1) is transferred or transferable, after releasing the operative connection with a second transmission stage (24.2), into the side of the enclosure (15) remote from the rotor.

10. The use as claimed in claim 9, **characterised in that** the lifting means (33) constructed in the form of chain hoists (33) are so constructed that when they are actuated, preferably simultaneously, they are liftable upwards or lowerable and/or that the chain hoists (33) are adjustable vertically.

11. The use as claimed in one of claims 7 to 10, **characterised in that** the lifting device (31) includes a, preferably demountable, frame with a transverse beam (37) and two support beams (35, 36) provided on the transverse beam (37), wherein, in particular, the one or more cross beams (32) are arranged on the transverse beam (37) with the lifting means (33).

## Revendications

1. Procédé de démontage d'un mécanisme de transmission d'une éolienne (10), en particulier d'une éolienne off-shore, comportant plusieurs étages de transmission (24.1, 24.2, 25), ledit mécanisme de transmission (22) est ou sera logé dans une nacelle (15) montée sur un mât (11) de l'éolienne (10), une liaison fonctionnelle existant entre lesdits étages de transmission (24.1, 24.2, 25), et les étapes suivantes du procédé étant mises en oeuvre :
a) un dispositif de levage (31), de préférence non stationnaire, est mis en place dans la nacelle (15) au-dessus du mécanisme de transmission (22) à plusieurs étages ;
b) la liaison fonctionnelle est désolidarisée entre le premier étage de transmission (25) et un deuxième étage de transmission (24.2) ;
c) le premier étage de transmission (25) est soulevé moyennant l'utilisation du dispositif de levage (31) et est détaché du deuxième étage de transmission (24.2), ledit premier étage de transmission (25) étant déplacé et immobilisé dans le côté de la nacelle (15), détourné du rotor ;
la partie supérieure du carter du premier étage de transmission (25) étant soulevée et étant disposée à une distance prédéterminée de la partie inférieure du carter avant la mise en oeuvre de l'étape c) du procédé.

2. Procédé selon la revendication 1, **caractérisé en ce que**, avant le levage du premier étage de transmission (25) et/ou la séparation entre le premier étage de transmission (25) et le deuxième étage de transmission (24.2) (étape c)), une pièce du deuxième étage de transmission (24.2) est immobilisée par un dispositif de retenue, la pièce immobilisée ou à immobiliser du deuxième étage de transmission (24.2) étant réalisée sous la forme d'un arbre ou d'une roue dentée ou d'un palier ou d'une pièce d'un étage planétaire, de préférence un porte-satellites ou une roue planétaire ou une couronne ou une roue solaire.

3. Procédé selon la revendication 1 ou 2, **caractérisé en ce que** la partie supérieure du carter est immobilisée au moyen d'écarteurs au-dessus de la partie inférieure du carter, et/ou la partie inférieure est déplacée, conjointement avec la partie supérieure, dans le côté de la nacelle, détourné du rotor.

4. Procédé selon l'une quelconque des revendications 1 à 3, **caractérisé en ce que**, avant la mise en oeuvre de l'étape c), on supprime un couplage entre le mécanisme de transmission (22) et un générateur (28) et/ou on démonte un dispositif d'alimentation en énergie d'un système d'orientation des pales du rotor et/ou on interrompt la liaison fonctionnelle d'un système d'orientation des pales du rotor dans le moyeu du rotor (13).

5. Procédé selon l'une quelconque des revendications 1 à 4, **caractérisé en ce que** le premier étage de transmission (25) déplacé est un étage de pignon droit (25) du mécanisme de transmission (22), une pièce accessible à l'intérieur du mécanisme de transmission étant remplacée en particulier après le déplacement du premier étage de transmission (25), la pièce à remplacer étant en particulier un palier à roulement, de préférence un roulement à galets coniques.

6. Procédé selon l'une quelconque des revendications 1 à 5, **caractérisé en ce que**, après le démontage du mécanisme de transmission (22), et en particulier après le remplacement d'une pièce à l'intérieur du mécanisme de transmission, le mécanisme de transmission (22) est assemblé en exécutant dans l'ordre inverse les étapes correspondantes du procédé, mises en oeuvre inversement.

7. Utilisation d'un dispositif de levage (31) dans une nacelle d'une éolienne (10), en particulier une éolienne (10) off-shore, pour la mise en oeuvre du procédé selon les étapes 1 à 6, pour le démontage ou le montage d'un mécanisme de transmission à plusieurs étages de transmission, monté dans la nacelle, ledit dispositif de levage (31) pour la mise en oeuvre du démontage ou du montage du mécanisme de transmission (22) est ou sera mis en place, de préférence temporairement, dans la nacelle (15), ledit dispositif de levage (31) est ou sera constitué de plusieurs parties, ledit dispositif de levage (31) à l'état monté étant disposé au-dessus du mécanisme de transmission (22).

8. Utilisation selon la revendication 7, **caractérisée en ce que** le dispositif de levage (31) est fixé sur le mécanisme de transmission (22) et/ou à côté du mécanisme de transmission (22) sur un bâti de machine (19) dans la nacelle (15).

9. Utilisation selon la revendication 7 ou 8, **caractérisée en ce que** le dispositif de levage (31) comporte des moyens de levage (33) mobiles, lesdits moyens de levage (33) étant déplaçables en particulier le long d'une ou de plusieurs traverses (32) d'un bâti, et/ou les moyens de levage (33) étant réalisés sous la forme de plusieurs palans à chaînes (33), de telle sorte qu'en particulier un premier étage de transmission (24.1), après la désolidarisation de la liaison fonctionnelle, sera déplacé ou peut être déplacé dans le côté de la nacelle (15), détourné du rotor.

10. Utilisation selon la revendication 9, **caractérisée en ce que** lesdits moyens de levage (33), réalisés sous forme de palans à chaînes (33), sont conçus de telle sorte qu'au moment de leur actionnement ils peuvent être levés ou abaissés verticalement, de préférence simultanément, et/ou **en ce que** les palans à chaînes (33) sont réglables en hauteur.

11. Utilisation selon l'une quelconque des revendications 7 à 10, **caractérisée en ce que** le dispositif de levage (31) comporte un bâti, en particulier démontable, comportant une barre transversale (37) et deux montants d'appui (35, 36) prévus sur la barre transversale (37), la ou les traverses (32) étant disposées avec les moyens de levage (33) en particulier sur la barre transversale (37).
